# EUROPEAN PATENT SPECIFICATION

(11) **EP 2 600 646 B1**
(45) Date of publication and mention of the grant of the patent: **15.05.2019**
(21) Application number: 11817715.3
(22) Date of filing: 10.06.2011
(51) Int. Cl.: H04W 12/04, H04W 36/00

(54) **METHOD FOR DERIVING KEY BY MULTISYSTEM RADIO ACCESS NETWORK AND MULTISYSTEM RADIO ACCESS NETWORK**
VERFAHREN ZUM ABLEITEN VON SCHLÜSSELN DURCH EIN MULTISYSTEM-FUNKZUGANGSNETZ UND MULTISYSTEM-FUNKZUGANGSNETZ
PROCÉDÉ D'OBTENTION DE CLÉ PAR UN RÉSEAU D'ACCÈS RADIO MULTISYSTÈME ET RÉSEAU D'ACCÈS RADIO MULTISYSTÈME

(30) Priority: 17.08.2010 CN 201010258921
(43) Date of publication of application: 05.06.2013
(73) Proprietor: ZTE Corporation, Guangdong Province 518057 (CN)
(72) Inventor: LIU, Fulei, Shenzhen City Guangdong Province 518057 (CN); DOU, Jianwu, Shenzhen City Guangdong Province 518057 (CN); DONG, Xiaohu, Shenzhen City Guangdong Province 518057 (CN)
(74) Representative: Murgitroyd & Company
(86) International application number: PCT/CN2011/075560
(87) International publication number: WO 2012/022188

(56) References cited:
- EP-A1- 1 915 022
- EP-A1- 2 262 317
- WO-A1-2009/132524
- WO-A2-2009/082172
- CN-A- 101 772 019
- US-B1- 6 671 507
- T-MOBIL ET AL: "An Analysis of Possible Handover Mechanisms between GSM and UMTS", 3GPP DRAFT; S3-99271_T3-99234_ INTEROPERATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. Bonn; 19990927, 27 September 1999 (1999-09-27), XP050267901,
- "3rd Generation Partnership Project;Technical Specification Group Services and System Aspects; 3G Security;Security architecture(Release 9)", 3GPP DRAFT; 33102-920, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, 31 March 2010 (2010-03-31), XP050435341,
- SIEMENS ATEA1: "Interoperation between UMTS and GSM", 3GPP DRAFT; S3-99158, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CN WG2, no. Visby; 19990719, 5 January 2000 (2000-01-05), XP050403604,
- ERICSSON: "A Possible Handover Mechanism between GSM and UMTS", 3GPP DRAFT; S3-99267_INTEROPERATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. Bonn; 19990927, 27 September 1999 (1999-09-27), XP050267897,

## Description

### Technical Field

The present invention relates to mobile communication technology, and particularly, to a method for acquiring a key by a multi-system radio access network, and a multi-system radio access network.

### Background of the Related Art

Currently, authentication and encryption of a Universal Mobile Telecommunications System (UMTS) and Global System for Mobile Communications (GSM) defined by the 3GPP protocol are both carried out independently and separately. Wherein, the authentication of the UMTS is implemented between a Universal Subscriber Identity Module (USIM) and Visiting Location Register (VLR)/Serving GPRS Support Node (SGSN), and between the USIM and Home Location Register (HLR)/Authentication Center (AuC). The authentication quintuplets are used which are: Random challenge (RAND)/Expected Response (XRES)/Ciphering Key (CK)/Integrity Key (IK)/Authentication Token (AUTN). After passing the authentication, with regard to a Circuit Switch (CS) domain, the VLR sends the keys CK and IK to an RNC, and the RNC and USIM implement the ciphering; with regard to a Packet Switch (PS) domain, the SGSN and USIM implement the ciphering. The authentication of the GSM is implemented between a Subscriber Identity Module (SIM) and VLR/SGSN, and between the SIM and HLR/AuC. The authentication triplets are used which are: Random challenge (RAND)/Signed Response (SRES)/Cipher Key (Kc). After the SIM and VLR/SGSN implement the authentication, with regard to the CS domain, the VLR sends the key Kc to a BSC, and the BSC and SIM implement the ciphering; with regard to the PS domain, the SGSN and SIM implement the ciphering. In addition, R99+HLR/Au and R99+VLR/SGSN have the function of converting the keys CK/IK and Kc according to different radio access networks of UMTS Terrestrial Radio Access Network (UTRAN) and Base Station System (BSS).

Therefore, according to the radio access network UTRAN or BSS, the VLR/SGSN will send a key directly generated by the HLR/AuC or a key converted by the VLR/SGSN itself according to the radio access network. For example, when the USIM accesses the UTRAN, the VLR will send the keys CK and IK directly generated by the HLR/AuC to the UTRAN; and when the USIM accesses the GSM BSS, the VLR will convert the keys CK and IK generated by the HLR/AuC into the Kc and send the Kc to the BSS. Conversely, when the SIM accesses the UTRAN, the VLR will convert the Kc generated by the HLR/AuC into the CK and IK and send the CK and IK to the UTRAN; and when the SIM accesses through the GSM BSS, the VLR will directly send the Kc generated by the HLR/AuC to the BSS. Therefore, when a mobile subscriber performs cross-system handover, such as a handover from the UMTS to GSM (vice versa), if the two systems both adopt the ciphering and ciphering keys are different, with regard to a CS domain voice service, it is required to wait until the radio side RNC or BSC obtain keys from the VLR, then the service can be continued. The related technology can be found in T-MOBILE ET AL: "An Analysis of Possible Handover Mechanisms between GSM and UMTS" (1999-09-27); "3rd Generation Partnership Project; Technical Specification Group Services and System Aspects; 3G Security; Security architechture (Release 9)" (2010-03-31); SIEMENS ATEA1: "Interoperation between UMTS and GSM" (2000-01-05); and WO 2009/132524 A1.

### Summary of the Invention

The object of the present invention is to provide a method for a multi-system radio access network acquiring a key, and a multi-system radio access network, so as to obtain a target system key in the condition of no participation of the multi-system core network.

This object is solved by a method having the features of claim 1 and by an apparatus having the features of claim 6. Advantageous embodiments thereof are defined in the respective dependent claims.

In the present invention, the multi-system radio access network parses the authentication message to learn whether the key is the initial value, and if the key is the initial value, the key conversion is directly executed to obtain the target system key with no need of participation of the core network, which shortens the interruption time of user plane data stream, and improves the experience of users on voice services.

### Brief Description of Drawings

FIG. 1 is a schematic diagram of a method for acquiring a key by a multi-system radio access network according to the present invention;
FIG. 2 is a connection diagram of all the network elements in a multi-system network;
FIG. 3 is a flow chart of the example 1 according to the present invention;
FIG. 4 is a flow chart of the example 2 according to the present invention;
FIG. 5 is a flow chart of the example 3 according to the present invention; and
FIG. 6 is a schematic diagram of modular structure of the multi-system radio access network according to the present invention.

### Preferred Embodiments of the Present Invention

Since ciphering keys of the UTRAN and GSM are different, in the related art, when a user performs multi-system handover, radio access networks UTRAN/BSS need to interact with the VLR to obtain the ciphering keys of their own systems, in order to shorten the interruption time of user plane data and reduce handover delay, in the present invention, the radio access networks UTRAN/BSS perform conversion and communication of key information independently, and try to make a core network not sense it. Meanwhile, due to non-self-completeness of conversion algorithms c3, c4 and c5 between CK/IK and Kc, only after obtaining the ciphering keys initially generated by HLR/AuC, can the radio access networks RNC/BSC perform conversion between the CK/IK and Kc independently.

Furthermore, in the present invention, with respect to the problem that whether the key is directly generated by the HLR/AuC or converted from the VLR can not be learned when the radio access network RNC or BSC obtains the key from the VLR, the solution is the radio access network parsing a Non-Access-Stratum (NAS) message to learn whether a USIM card or an SIM card accesses the current system, thereby learning whether the key sent by the VLR to the radio access network is an initial value generated by the HLR/AuC, and then judging whether the radio access network can execute the key conversion in a multimode system handover independently.

In addition, the contents of the present invention are not just limited to the UMTS and GSM system, and also applicable to a TD-SCDMA system.

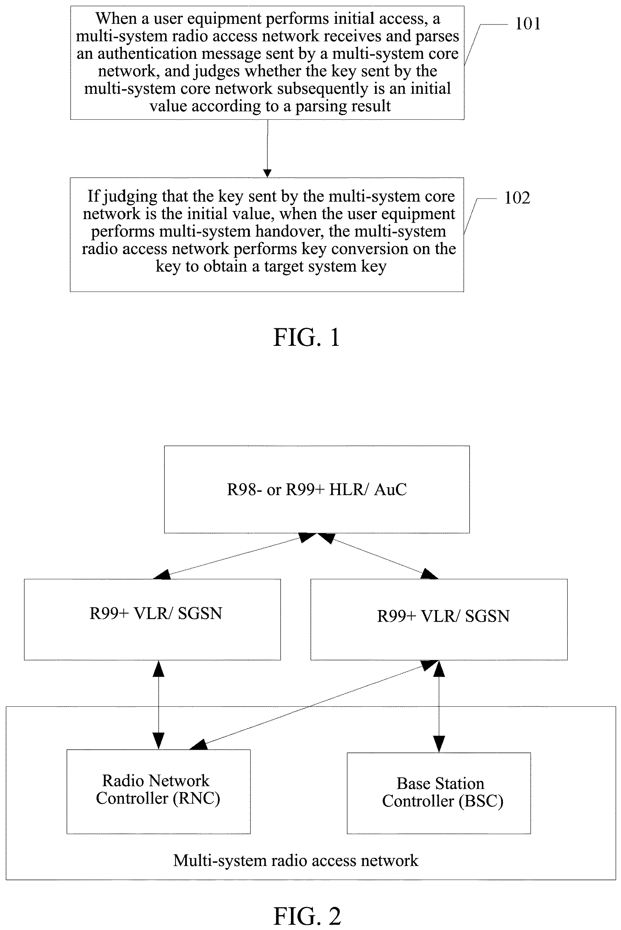

As shown in FIG. 1, the method for acquiring a key by a multi-system radio access network according to the present invention includes following steps.

In step 101, when the user equipment performs initial access, the multi-system radio access network receives and parses an authentication message sent by a multi-system core network, and judges whether the key sent by the multi-system core network subsequently is an initial value according to a parsing result.

The multi-system handover mentioned in the present invention refers to a handover between a 2G system and 3G system, the 3G system refers to a Universal Mobile Telecommunications System (UMTS) or a Time Division-Synchronous Code Division Multiple Access (TD-SCDMA) system, and the 2G system refers to a Global System for Mobile Communications (GSM).

The multi-system radio access network includes a Radio Network Controller (RNC) and a Base Station Controller (BSC).

The applied scenario is that the RNC and BSC are connected to the same R99+ VLR/SGSN (the R98- VLR/SGSN does not support the RNC) or two different R99+ VLR/SGSNs, and multiple systems use the same R98- or R99+HLR/AuC as shown in FIG. 2.

No matter the UMTS system, TD-SCDMA system and the GSM system, the authentication process is implemented between a USIM or SIM and the VLR/SGSN, and message interaction is also performed between the two directly. An authentication quintuplet is used during the authentication between a USIM card and the VLR/SGSN, and an authentication triplet is used during the authentication between an SIM card and the VLR/SGSN.

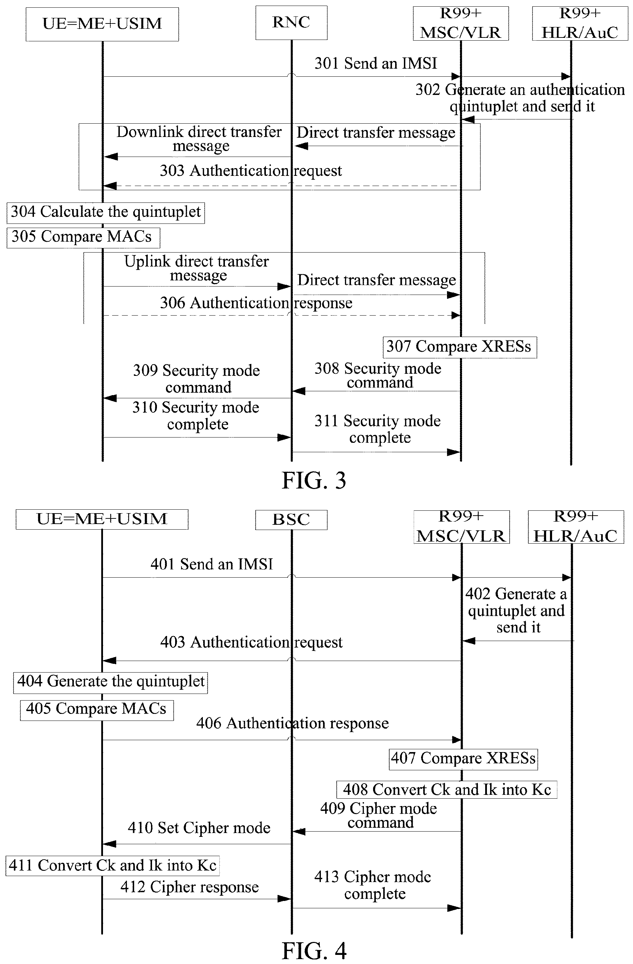

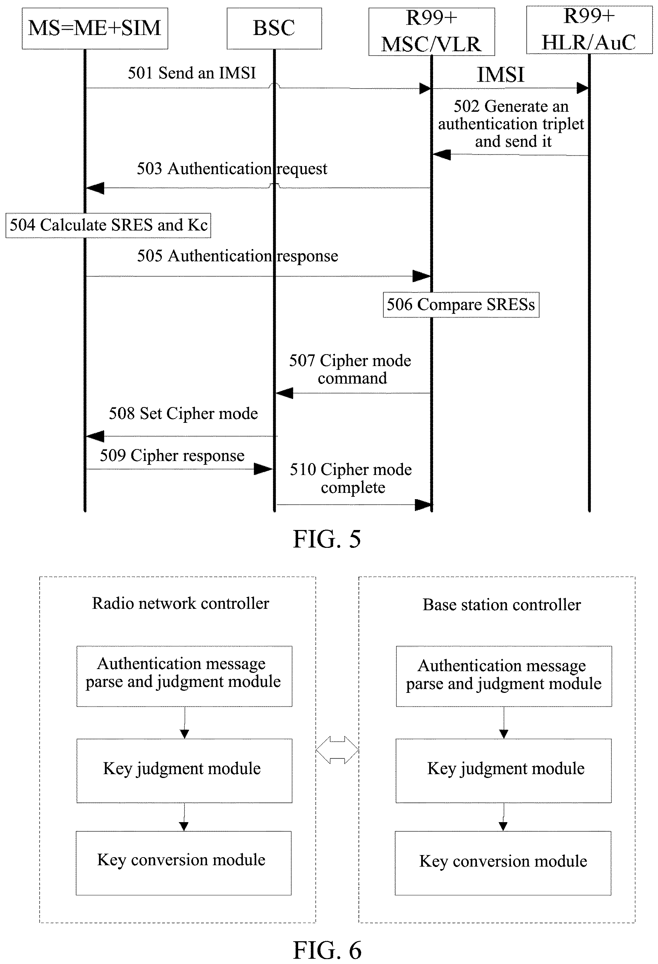

As shown in FIG. 3 and FIG. 5, an NAS authentication message interacted between the USIM or SIM and the VLR is: an AUTHENTICATION REQUEST and an AUTHENTICATION RESPONSE, the RNC or BSC in the multiple systems only needs to obtain one Information Element (IE) in these two messages by parsing, that is, to know whether the authentication message is an authentication quintuplet message or authentication triplet message, it can be acquired whether the USIM card or the SIM card will access the current system. In the UMTS, the AUTHENTICATION REQUEST is implemented through a Direct transfer message and a Downlink direct transfer message on a radio interface; the AUTHENTICATION RESPONSE is implemented through Uplink direct transfer and Direct transfer on the radio interface.

A method for obtaining an authentication group is described as follows.

According to a message structure defined by the 3GPP protocol, the AUTHENTICATION REQUEST used for quintuplet authentication includes an authentication parameter Authentication Token (AUTN); and the authentication request used for triplet authentication does not include the information element AUTN.

The RNC or BSC only needs to parse the AUTHENTICATION REQUEST, if the authentication parameter AUTN is discovered in the AUTHENTICATION REQUEST, it is indicated that the USIM card is performing the authentication, that is, the authentication request is a quintuplet authentication message, and if the authentication parameter AUTN is not discovered in the AUTHENTICATION REQUEST, it is indicated that the SIM card is performing the authentication, that is, the authentication request is a triplet authentication message.

According to the message structure defined by the 3GPP protocol, the AUTHENTICATION RESPONSE used for quintuplet authentication includes an information element of Authentication Response parameter (extension); and the authentication request used for triplet authentication does not include the information element.

When the RNC or BSC parses the AUTHENTICATION RESPONSE, if there is the authentication response parameter extension, it is indicated that it is the USIM card, that is, the authentication response is a quintuplet authentication message, if there is no the authentication response parameter extension, it is indicated that it is the SIM card, that is, the authentication response is a triplet authentication message.

After parsing the authentication request or authentication response, the RNC or BSC further judges whether the key sent by the core network subsequently is the initial value, and the key is judged as the initial value in the following two situations.

Situation 1, the user equipment performs the initial access through the RNC, and the received authentication message is the quintuplet authentication message, that is, the RNC learns by parsing that the USIM card accesses the system.

Situation 2, the user equipment performs the initial access through the BSC, and the received authentication message is not the quintuplet authentication message, that is, the BSC learns by parsing that the SIM card accesses the system.

Conversely, the key is judged as a calculated value but not the initial value in the following two situations.

Situation 1, the user equipment performs the initial access through the RNC, and the received authentication message is not the quintuplet authentication message, that is, the RNC learns by parsing that the SIM card accesses the system.

Situation 2, the user equipment performs the initial access through the BSC, and the received authentication message is the quintuplet authentication message, that is, the BSC learns by parsing that the USIM card accesses the system.

In step 102, if judging that the key sent by the multi-system core network is the initial value, when the user equipment performs the multi-system handover, the multi-system radio access network performs key conversion on the key to obtain a target system key.

In the present invention, only when the key is judged as the initial value can the radio access network perform the key conversion.

When the key sent by the multi-system core network is a Ciphering Key (CK) and Integrity Key (IK) which are judged as the initial value, and the user equipment performs handover from the Universal Mobile Telecommunications System (UMTS) or Time Division-Synchronous Code Division Multiple Access (TD-SCDMA) system to the Global System for Mobile Communications (GSM), the multi-system radio access network converting the CK and IK into a Cipher Key (Kc) is specifically:
the RNC using an algorithms c3 to convert the CK and IK sent by the MSC/VLR through a Security mode command into the Kc, and then send the Kc to the BSC.
the algorithms c3 is: Kc[GSM]=CK1 xor CK2 xor IK1 xor IK2;
wherein, both CKi and IKi are 64 bits, CK=CK1 ∥ CK2 and IK=IK1 ∥ IK2.

When the key sent by the multi-system core network is the Kc which is judged as the initial value, and the user equipment performs handover from the GSM to the UMTS or TD-SCDMA system, the multi-system radio access network converting the Kc into the CK and IK is specifically:
the BSC using an algorithm c4 and algorithm c5 to convert the Kc sent by the MSC/VLR into the CK and IK, and then send the CK and IK to the RNC.

The algorithms c4 is: CK[UMTS]=Kc ∥ Kc;
the algorithms c5 is: IK[UMTS]=Kc1 xor Kc2 ∥ Kc ∥ Kc1 xor Kc2;
in c5, Kci is 32 bits and Kc=Kc1 ∥ Kc2.

### Example 1

As shown in FIG. 3, when a radio access network is a UTRAN, an authentication and ciphering flow of USIM user voice service includes the following steps.

In step 301, a USIM sends an IMSI to HLR/AuC through MSC/VLR.

In step 302, the HLR/AuC generates an authentication quintuplet: RAND, XRES, CK, IK and AUTN, wherein the AUTN includes a Sequence number (SQN), an Anonymity Key (AK), an Authentication management field (AMF) and a Message Authentication Code (MAC), and sends the authentication quintuplet to the MSC/VLR.

In step 303, the MSC/VLR sends the RAND and AUTN to the USIM through an AUTHENTICATION REQUEST.

It is implemented on a radio interface through the following messages:
the MSC/VLR sends Direct transfer to an RNC, and NAS messages (such as the RAND and AUTN) required to be transferred transparently is included in an IE NAS-Protocol Data Unit (PDU);
the RNC sends Downlink direct transfer to a UE, and the NAS messages required to be transferred transparently is included in an IE NAS message;
the radio side RNC parses the message, if the AUTN is discovered in the message, it is indicated that a USIM card is undergoing authentication, and the RNC can save the information.

In step 304, the USIM calculates the quintuplet: RAND, XRES, CK, IK and AUTN according to an authentication Key (K) and the RAND.

In step 305, the USIM compares the MAC calculated by the USIM itself with the MAC sent from the MSC/VLR.

In step 306, if the two MACs are equal, the USIM sends the XRES calculated by the USIM itself to the MSC/VLR through an AUTHENTICATION RESPONSE.

It is implemented on the radio interface through the following messages:
the UE sends Uplink direct transfer to the RNC, and the NAS messages (such as the XRES) required to be transferred transparently is included in the IE NAS message;
the RNC sends the Direct transfer to the MSC/VLR, and the NAS messages required to be transferred transparently is included in the IE NAS-PDU;
the radio side RNC parses the information, if an information element of Authentication Response parameter (extension) is discovered, it is indicated that it is the USIM card, and the RNC can save the information. The RNC only needs to parse any one of the messages in step 303 or 306.

In step 307, the MSC/VLR compare the XRES transmitted from the HLR/AuC with the XRES sent from the USIM, and if the two XRESs are equal, the MSC/VLR sends a ciphering message to the RNC.

In step 308, the MSC/VLR send a Security mode command to the RNC, and the keys CK and IK are carried.

In step 303 or 306, the RNC learns by parsing that the USIM is undergoing the authentication, thus in the following process, if the UE performs handover to a GSM system, the RNC directly uses an algorithm c3 to obtain a Kc which is transmitted to a BSC without interacting with the VLR.

In step 309, the RNC sends the Security mode command to the UE for performing ciphering.

In step 310, the UE replies Security mode complete to the RNC for indicating that the ciphering at the radio side is completed.

In step 311, the RNC replies the Security mode complete to the MSC/VLR for indicating that the ciphering is completed.

### Example 2

As shown in FIG. 4, when a radio access network is a BSS, an authentication and ciphering flow of USIM user voice service includes the following steps.

In step 401, a USIM sends an IMSI to HLR/AuC through MSC/VLR.

In step 402, the HLR/AuC generates an authentication quintuplet: RAND, XRES, CK, IK and AUTN, and send the authentication quintuplet to the MSC/VLR.

In step 403, the MSC/VLR sends the RAND and AUTN to the USIM through an AUTHENTICATION REQUEST.

Similar to the example 1, a radio side BSC transparently transfers and parses the message, and if the AUTN is discovered in the message, it is indicated that a USIM card is undergoing authentication, and the BSC can save the information.

In step 404, the USIM calculates the quintuplet: RAND, XRES, CK, IK and AUTN according to an authentication Key (K) and the RAND.

In step 405, the USIM compares the MAC calculated by the USIM itself with the MAC sent from the MSC/VLR.

In step 406, if the two MACs are equal, the USIM sends the XRES calculated by the USIM itself to the MSC/VLR through an AUTHENTICATION RESPONSE.

The radio side BSC transparently transfers and parses the information, if an information element of Authentication Response parameter (extension) is discovered, it is indicated that it is the USIM card, and the BSC can save the information. The BSC only needs to obtain by parsing any one of the messages in step 403 or 406.

In step 407, the MSC/VLR compare the XRES transmitted from the HLR/AuC with the XRES sent from the USIM, and if the two XRESs are equal, the MSC/VLR prepares to send a ciphering message to the BSC.

In step 408, since the radio access network is the BSS, the MSC/VLR need to convert the CK and IK into a Kc and then send the Kc to the BSC.

In step 409, the MSC/VLR sends the Kc to the BSC through a cipher mode command.

In step 403 or 406, the BSC learns by parsing that the USIM is undergoing the authentication, thus it is judged that a key sent by a core network subsequently is a calculated value not an initial value, in the following process, if a UE is switched into a UTRAN system, the BSC can not directly use an algorithm c4 and algorithm c5 to obtain the CK and IK and then transmit the CK and IK to an RNC, but should send the initial CK and IK to the RNC through the VLR.

In step 410, the BSC sends Cipher mode setting to the UE for performing ciphering, and the key Kc is carried.

In step 411, the UE converts the initially generated CK and IK into the Kc independently.

In step 412, the UE and BSC complete the ciphering and reply a cipher response.

In step 413, the BSC replies Cipher mode complete to the MSC/VLR for indicating that the ciphering is completed.

### Example 3

As shown in FIG. 5, when a radio access network is a BSS, an authentication and ciphering flow of SIM user includes the following steps.

In step 501, an SIM sends an IMSI to HLR/AuC through MSC/VLR.

In step 502, the HLR/AuC generates authentication triplets and sends the authentication quintuplets to the MSC/VLR.

The authentication quintuplets are RAND, SRES and Kc.

In step 503, the MSC/VLR sends an AUTHENTICATION REQUEST including the RAND to the SIM.

A radio side BSC transparently transfers and parses the message, and if an AUTN is not discovered in the message, it is indicated that an SIM card is undergoing authentication, and the BSC can save the information.

In step 504, the SIM calculates the SRES and Kc according to an authentication Key (K) and the RAND.

In step 505, the SIM sends an Authentication response including the SRES calculated by the SIM itself to the MSC/VLR.

The radio side BSC transparently transfers and parses the information, if an information element of Authentication Response parameter (extension) is not discovered, it is indicated that it is the SIM card, and the BSC can save the information. The BSC only needs to obtain by parsing any one of the messages in step 503 or 505.

In step 506, the MSC/VLR compare the SRES transmitted from the HLR/AuC with the SRES sent from the SIM.

In step 507, if the two SRESs are equal, the MSC/VLR sends a Cipher mode command to the BSC.

In step 503 or 505, the BSC learns by parsing that the SIM is undergoing the authentication, thus it is judged that a key sent by a core network subsequently is an initial value, in the following process, if a UE is switched to a UTRAN system, the BSC can directly use algorithms c4 and c5 to obtain the CK and IK and then transmit them to an RNC, and then directly transmit the CK and IK to the RNC through interfaces Iur-g, so as to omit the interaction with the VLR.

In step 508, the BSC sends a Cipher mode setting command to the UE for indicating that the Kc is to be used to perform ciphering.

In step 509, the UE returns a Cipher response to the BSC for indicating that the ciphering at the radio side is completed.

In step 510, the BSC returns a Cipher mode complete message to the MSC/VLR for indicating that the ciphering is completed.

In order to implement the above method, the present invention also provides a multi-system radio access network, and as shown in FIG. 6, the multi-system radio access network includes:
an authentication message parse and judgment module, configured to: when a user equipment performs initial access, receive and parse an authentication message sent by a multi-system core network;
a key judgment module, configured to: judge whether a key sent by the multi-system core network subsequently is an initial value according to a parsing result; and
a key conversion module, configured to: when the key judgment module judges that the key sent by the multi-system core network is the initial value, and the user equipment performs multi-system handover, perform key conversion on the key sent by the multi-system core network to obtain a target system key.

Specifically, the multi-system radio access network includes two logical units: a Radio Network Controller (RNC) and a Base Station Controller (BSC), and both the RNC and BSC comprise the authentication message parse and judgment module, key judgment module and key conversion module, wherein:
when the user equipment performs the initial access through the RNC, and if the authentication message parse and judgment module of the RNC judges that the received authentication message is a quintuplet authentication message, the key judgment module of the RNC judges that the key sent by the multi-system core network is the initial value;
or, when the user equipment performs the initial access through the BSC, and if the authentication message parse and judgment module of the BSC judges that the received authentication message is not the quintuplet authentication message, the key judgment module of the BSC judges that the key sent by the multi-system core network is the initial value.

The authentication message comprises an authentication request and an authentication response, if the authentication request includes an Authentication Token (AUTN) or the authentication response includes an Authentication Response parameter (extension), the authentication message parse and judgment module of the RNC and BSC judges that the authentication message is the quintuplet authentication message, and if the authentication request does not include the AUTN and the authentication response does not include the Authentication Response parameter (extension), judges that the authentication message is not the quintuplet authentication message.

If the key judgment module of the RNC judges that the key sent by the multi-system core network is the initial value, and the key includes a Ciphering Key (CK) and an Integrity Key (IK), when the user equipment performs handover from a Universal Mobile Telecommunications System (UMTS) or Time Division-Synchronous Code Division Multiple Access (TD-SCDMA) system to a Global System for Mobile Communications (GSM), the key state conversion module of the RNC converts the CK and IK into a Cipher Key (Kc) to send the Kc to the BSC;
if the key judgment module of the BSC judges that the key sent by the multi-system core network is the initial value, and the key is the Kc, when the user equipment performs handover from the GSM to the UMTS or TD-SCDMA system, the key state conversion module of the BSC converts the Kc into the CK and IK and send the CK and IK to the RNC.

The multi-system radio access network is in a single-mode form or a multi-mode form.

The present invention is applied to the handover after a CS domain service performs initial access, if a handover is performed back to the original system again after the handover, i.e. there is still no need of the participation of the core network, the radio access network executes the ciphering according to the cached key.

The idea of solving the technical problem in the present invention is: in the condition of no need of participation of the core network, the radio access network obtaining the target system key independently. Therefore, alternatively, in the condition that the key is the initial value, a source system radio access network can send the initial value of the key to a target system radio access network, and the target system radio access network completes the key conversion.

The ordinary person skilled in the art can understand that all or part of the steps in the above method can be completed by a program instructing related hardware, and the program can be stored in a computer readable memory medium, such as a read-only memory, disk or optical disk and so on. Alternatively, all or part of the steps of the above examples also can be implemented by using one or multiple integrated circuits. Correspondingly, each module/unit in the above examples can be implemented in a form of hardware, and also can be implemented in a form of software function module. The present invention is not limited to any combination of hardware and software in a specific form.

The ordinary person skilled in the art should understand that, with regard to the present invention, modifications, transformations or equivalent substitutions can be made within the spirit and scope of the present invention, and all these modifications, transformations and equivalent substitutions should be covered within the scope of the appended claims of the present invention.

In implementation of the method and radio access network of the present invention, the radio access network parses the authentication message to learn whether the key is the initial value, and if the key is the initial value, the key conversion is directly executed to obtain the target system key with no need of participation of the core network, which shortens the interruption time of user plane data stream, and improves the experience of users on voice services. In certain scenarios, it may be achieved that the core network does not sense it; the process and time of interacting signaling between the radio access network (RNC/BSC) and core network (VLR) to obtain ciphering keys are reduced, and especially when the RNC and BSC are connected to two different VLRs, the improvement is particularly significant.

### Industrial Applicability

Compared with the related art, in the present invention, the multi-system radio access network parses the authentication message to learn whether the key is the initial value, and if the key is the initial value, the key conversion is directly executed to obtain the target system key with no need of participation of the core network, which shortens the interruption time of user plane data stream, and improves the experience of users on voice services.

## Claims

1. A method for acquiring a key by a multi-system radio access network, comprising:
when a user equipment performs initial access, an authentication message parse and judgment module of an initial radio access network in the multi-system radio access network receiving and parsing an authentication message sent by a multi-system core network, and a key judgment module of the initial radio access network judging whether a ciphering key used by the initial radio access network and sent by the multi-system core network subsequently is an initial value of the ciphering key generated by Home Location Register/Authentication Center, HLR/AuC, according to a parsing result; and
if judging that the key sent by the multi-system core network is the initial value, when the user equipment performs multi-system handover from the initial radio access network to a target radio access network in the multi-system radio access network, a key conversion module of the initial radio access network performing key conversion on the ciphering key to obtain a target system key, which is transmitted to the target radio access network;
wherein,
the multi-system radio access network comprises a Radio Network Controller ,RNC, and a Base Station Controller,BSC, and both the RNC and BSC comprise the authentication message parse and judgment module, key judgment module and key conversion module, wherein:
the step of judging whether the key sent by the multi-system core network subsequently is the initial value according to a parsing result comprises: when the user equipment performs the initial access through the RNC, and the authentication message is a quintuplet authentication message, or, when the user equipment performs the initial access through the BSC, and the authentication message is not the quintuplet authentication message, judging that the key sent by the multi-system core network subsequently is the initial value.

2. The method according to claim 1, wherein, the authentication message comprises an authentication request and an authentication response;
the step of receiving and parsing the authentication message comprises: if the authentication request includes an authentication token or the authentication response includes an authentication response parameter extension, judging that the authentication message is the quintuplet authentication message.

3. The method according to claim 1, wherein, the step of the initial radio access network performing key conversion on the key to obtain a target system key comprises:
if the key sent by the multi-system core network is a Ciphering Key, CK, and an Integrity Key, IK, and the CK and IK are the initial value, when the user equipment performs handover from a Universal Mobile Telecommunications System, UMTS, or a Time Division-Synchronous Code Division Multiple Access, TD-SCDMA system to a Global System for Mobile Communications, GSM, the initial radio access network converting the CK and IK into a Cipher Key, Kc; or,
if the key sent by the multi-system core network is the Kc, and the Kc is the initial value, when the user equipment performs handover from the GSM to the UMTS or TD-SCDMA system, the initial radio access network converting the Kc into the CK and IK.

4. The method according to claim 3, wherein:
the step of converting the CK and IK into the Kc comprises: when the user equipment performs handover to the GSM, the RNC completing the conversion from the CK and IK to the Kc and sending the Kc to the BSC;
the step of converting the Kc into the CK and IK comprises: when the user equipment performs handover to the UMTS or TD-SCDMA system, the BSC completing the conversion from the Kc to the CK and IK and sending the CK and IK to the RNC.

5. The method according to claim 1, wherein, the multi-system radio access network is in a single-mode form or a multi-mode form.

6. An apparatus for acquiring a key by an initial radio access network in a multi-system radio access network, comprising:
an authentication message parse and judgment module, configured to: when a user equipment performs initial access, receive and parse an authentication message sent by a multi-system core network;
a key judgment module, configured to: judge whether a ciphering key used by the initial radio access network and sent by the multi-system core network subsequently is an initial value of the ciphering key generated by Home Locator Register/Authentication Center, HLR/AuC, according to a parsing result; and
a key conversion module, configured to: if the key judgment module judges that the key sent by the multi-system core network is the initial value, when the user equipment performs multi-system handover from the initial radio access network to a target radio access network in the multi-system radio access network, perform key conversion on the ciphering key sent by the multi-system core network to obtain a target system key, which is transmitted to the target radio access network;
wherein, the multi-system radio access network comprises two logical units: a Radio Network Controller, RNC, and a Base Station Controller, BSC, and both the RNC and BSC comprise the authentication message parse and judgment module, key judgment module and key conversion module, wherein:
the key judgment module of the RNC is configured to judge whether the key sent by the multi-system core network is the initial value in the following way: when the user equipment performs the initial access through the RNC, and the authentication message parse and judgment module of the RNC judges that the received authentication message is a quintuplet authentication message, judging that the key sent by the multi-system core network is the initial value;
the key judgment module of the BSC is configured to judge whether the key sent by the multi-system core network is the initial value in the following way: when the user equipment performs the initial access through the BSC, and the authentication message parse and judgment module of the BSC judges that the received authentication message is not the quintuplet authentication message, judging that the key sent by the multi-system core network is the initial value.

7. The apparatus according to claim 6, wherein, the authentication message comprises an authentication request and an authentication response;
the authentication message parse and judgment module is configured to parse the authentication message sent by the multi-system core network in the following way: if the authentication request includes an authentication token or the authentication response carries an authentication response parameter extension, judging that the authentication message is the quintuplet authentication message.

8. The apparatus according to claim 6, wherein,
the key conversion module of the RNC is configured to perform key conversion on the key sent by the multi-system core network to obtain the target system key in the following way: if the key sent by the multi-system core network is the initial value, and the key comprises a Ciphering Key, CK, and an Integrity Key, IK, when the user equipment performs handover from a Universal Mobile Telecommunications System, UMTS, or a Time Division-Synchronous Code Division Multiple Access, TD-SCDMA, system to a Global System for Mobile Communications, GSM, the key conversion module of the RNC converts the CK and IK into a Cipher Key, Kc, and sends the Kc to the BSC;
the key conversion module of the BSC is configured to perform key conversion on the key sent by the multi-system core network to obtain the target system key in the following way: if the key sent by the multi-system core network is the initial value, and the key is the Kc, when the user equipment performs handover from the GSM to the UMTS or TD-SCDMA system, the key conversion module of the BSC converts the Kc into the CK and IK and sends the CK and IK to the RNC.

9. The apparatus according to claim 6, wherein, the multi-system radio access network is in a single-mode form or a multi-mode form.

## Patentansprüche

1. Ein Verfahren zum Erlangen eines Schlüssels durch ein Multisystem-Funkzugangsnetz, beinhaltend:
wenn eine Benutzerausrüstung einen anfänglichen Zugriff durchführt, Empfangen und Parsen, durch ein Authentifizierungsnachricht-Parsing- und -Beurteilungsmodul eines anfänglichen Funkzugangsnetzes in dem Multisystem-Funkzugangsnetz, einer von einem Multisystem-Kernnetz gesendeten Authentifizierungsnachricht und Beurteilen, durch ein Schlüsselbeurteilungsmodul des anfänglichen Funkzugangsnetzes, ob ein von dem anfänglichen Funkzugangsnetz verwendeter und von dem Multisystem-Kernnetz gesendeter Chiffrierschlüssel in der Folge ein anfänglicher Wert des von dem Heimatortsregister/der Authentifizierungszentrale, HLR/AuC (Home Location Register/Authentication Center), erzeugten Chiffrierschlüssels ist, gemäß einem Parsing-Ergebnis; und
falls beurteilt wird, dass der von dem Multisystem-Kernnetz gesendete Schlüssel der anfängliche Wert ist, wenn die Benutzerausrüstung eine Multisystem-Übergabe von dem anfänglichen Funkzugangsnetz zu einem Ziel-Funkzugangsnetz in dem Multisystem-Funkzugangsnetz durchführt, Durchführen, durch ein Schlüsselkonvertierungsmodul des anfänglichen Funkzugangsnetzes, einer Schlüsselkonvertierung des Chiffrierschlüssels, um einen Zielsystemschlüssel zu erhalten, welcher an das Ziel-Funkzugangsnetz übertragen wird;
wobei
das Multisystem-Funkzugangsnetz eine Funknetz-Steuereinrichtung, RNC (Radio Network Controller), und eine Basisstations-Steuereinrichtung, BSC (Base Station Controller), beinhaltet und sowohl die RNC als auch die BSC das Authentifizierungsnachricht-Parsing- und -Beurteilungsmodul, das Schlüsselbeurteilungsmodul und das Schlüsselkonvertierungsmodul beinhalten, wobei:
der Schritt des Beurteilens, ob der von dem Multisystem-Kernnetz gesendete Schlüssel in der Folge der anfängliche Wert gemäß einem Parsing-Ergebnis ist, Folgendes beinhaltet: wenn die Benutzerausrüstung den anfänglichen Zugriff durch die RNC durchführt und die Authentifizierungsnachricht eine Quintupel-Authentifizierungsnachricht ist oder wenn die Benutzerausrüstung den anfänglichen Zugriff durch die BSC durchführt und die Authentifizierungsnachricht nicht die Quintupel-Authentifizierungsnachricht ist, Beurteilen, dass der von dem Multisystem-Kernnetz gesendete Schlüssel in der Folge der anfängliche Wert ist.

2. Verfahren gemäß Anspruch 1, wobei die Authentifizierungsnachricht eine Authentifizierungsanfrage und eine Authentifizierungsantwort beinhaltet;
der Schritt des Empfangens und Parsens der Authentifizierungsnachricht Folgendes beinhaltet: falls die Authentifizierungsanfrage ein Authentifizierungstoken umfasst oder die Authentifizierungsantwort eine Authentifizierungsantwort-Parametererweiterung umfasst, Beurteilen, dass die Authentifizierungsnachricht die Quintupel-Authentifizierungsnachricht ist.

3. Verfahren gemäß Anspruch 1, wobei der Schritt des Durchführens, durch das anfängliche Funkzugangsnetz, der Schlüsselkonvertierung des Schlüssels, um einen Zielsystemschlüssel zu erhalten, Folgendes beinhaltet:
falls der von dem Multisystem-Kernnetz gesendete Schlüssel ein Chiffrierschlüssel, CK (Ciphering Key), und ein Integritätsschlüssel, IK (Integrity Key), ist und der CK und IK der anfängliche Wert sind, wenn die Benutzerausrüstung eine Übergabe von einem Universal Mobile Telecommunications System, UMTS, oder einem Zeitmultiplex-Synchroncodemultiplex-Vielfachzugriff(TD-SCDMA)-System zu einem Global System for Mobile Communications, GSM, durchführt, Konvertieren, durch das anfängliche Funkzugangsnetz, des CK und IK in einen Chiffreschlüssel, Kc (Cipher Key); oder, falls der von dem Multisystem-Kernnetz gesendete Schlüssel der Kc ist und der Kc der anfängliche Wert ist, wenn die Benutzerausrüstung eine Übergabe von dem GSM zu dem UMTS oder TD-SCDMA-System durchführt, Konvertieren, durch das anfängliche Funkzugangsnetz, des Kc in den CK und IK.

4. Verfahren gemäß Anspruch 3, wobei:
der Schritt des Konvertierens des CK und IK in den Kc Folgendes beinhaltet: wenn die Benutzerausrüstung eine Übergabe zu dem GSM durchführt, Abschließen, durch die RNC, der Konvertierung von dem CK und IK zu dem Kc und Senden des Kc an die BSC;
der Schritt des Konvertierens des Kc in den CK und IK Folgendes beinhaltet: wenn die Benutzerausrüstung eine Übergabe zu dem UMTS oder TD-SCDMA-System durchführt, Abschließen, durch die BSC, der Konvertierung von dem Kc zu dem CK und IK und Senden des CK und IK an die RNC.

5. Verfahren gemäß Anspruch 1, wobei das Multisystem-Funkzugangsnetz in einer Einzelmodusform oder einer Multimodusform vorliegt.

6. Eine Vorrichtung zum Erlangen eines Schlüssels durch ein anfängliches Funkzugangsnetz in einem Multisystem-Funkzugangsnetz, beinhaltend:
ein Authentifizierungsnachricht-Parsing- und -Beurteilungsmodul, das für Folgendes konfiguriert ist: wenn eine Benutzerausrüstung einen anfänglichen Zugriff durchführt, Empfangen und Parsen einer von einem Multisystem-Kernnetz gesendeten Authentifizierungsnachricht;
ein Schlüsselbeurteilungsmodul, das für Folgendes konfiguriert ist: Beurteilen, ob ein von dem anfänglichen Funkzugangsnetz verwendeter und von dem Multisystem-Kernnetz gesendeter Chiffrierschlüssel in der Folge ein anfänglicher Wert des von dem Heimatortsregister/der Authentifizierungszentrale, HLR/AuC, erzeugten Chiffrierschlüssels ist, gemäß einem Parsing-Ergebnis; und
ein Schlüsselkonvertierungsmodul, das für Folgendes konfiguriert ist: falls das Schlüsselbeurteilungsmodul beurteilt, dass der von dem Multisystem-Kernnetz gesendete Schlüssel der anfängliche Wert ist, wenn die Benutzerausrüstung eine Multisystem-Übergabe von dem anfänglichen Funkzugangsnetz zu einem Ziel-Funkzugangsnetz in dem Multisystem-Funkzugangsnetz durchführt, Durchführen einer Schlüsselkonvertierung des von dem Multisystem-Kernnetz gesendeten Chiffrierschlüssels, um einen Zielsystemschlüssel zu erhalten, welcher an das Ziel-Funkzugangsnetz übertragen wird;
wobei das Multisystem-Funkzugangsnetz zwei logische Einheiten beinhaltet: eine Funknetz-Steuereinrichtung, RNC, und eine Basisstations-Steuereinrichtung, BSC, und sowohl die RNC als auch die BSC das Authentifizierungsnachricht-Parsing- und -Beurteilungsmodul, das Schlüsselbeurteilungsmodul und das Schlüsselkonvertierungsmodul beinhalten, wobei:
das Schlüsselbeurteilungsmodul der RNC konfiguriert ist, um auf die folgende Weise zu beurteilen, ob der von dem Multisystem-Kernnetz gesendete Schlüssel der anfängliche Wert ist: wenn die Benutzerausrüstung den anfänglichen Zugriff durch die RNC durchführt und das Authentifizierungsnachricht-Parsing- und -Beurteilungsmodul der RNC beurteilt, dass die empfangene Authentifizierungsnachricht eine Quintupel-Authentifizierungsnachricht ist, Beurteilen, dass der von dem Multisystem-Kernnetz gesendete Schlüssel der anfängliche Wert ist;
das Schlüsselbeurteilungsmodul der BSC konfiguriert ist, um auf die folgende Weise zu beurteilen, ob der von dem Multisystem-Kernnetz gesendete Schlüssel der anfängliche Wert ist: wenn die Benutzerausrüstung den anfänglichen Zugriff durch die BSC durchführt und das Authentifizierungsnachricht-Parsing- und -Beurteilungsmodul der BSC beurteilt, dass die empfangene Authentifizierungsnachricht nicht die Quintupel-Authentifizierungsnachricht ist, Beurteilen, dass der von dem Multisystem-Kernnetz gesendete Schlüssel der anfängliche Wert ist.

7. Vorrichtung gemäß Anspruch 6, wobei die Authentifizierungsnachricht eine Authentifizierungsanfrage und eine Authentifizierungsantwort beinhaltet;
das Authentifizierungsnachricht-Parsing- und -Beurteilungsmodul konfiguriert ist, um die von dem Multisystem-Kernnetz gesendete Authentifizierungsnachricht auf die folgende Weise zu parsen: falls die Authentifizierungsanfrage ein Authentifizierungstoken umfasst oder die Authentifizierungsantwort eine Authentifizierungsantwort-Parametererweiterung trägt, Beurteilen, dass die Authentifizierungsnachricht die Quintupel-Authentifizierungsnachricht ist.

8. Vorrichtung gemäß Anspruch 6, wobei
das Schlüsselkonvertierungsmodul der RNC konfiguriert ist, um eine Schlüsselkonvertierung des von dem Multisystem-Kernnetz gesendeten Schlüssels auf die folgende Weise durchzuführen, um den Zielsystemschlüssel zu erhalten: falls der von dem Multisystem-Kernnetz gesendete Schlüssel der anfängliche Wert ist und der Schlüssel einen Chiffrierschlüssel, CK, und einen Integritätsschlüssel, IK, beinhaltet, wenn die Benutzerausrüstung eine Übergabe von einem Universal Mobile Telecommunications System, UMTS, oder einem Zeitmultiplex-Synchroncodemultiplex-Vielfachzugriff(TD-SCDMA)-System zu einem Global System for Mobile Communications, GSM, durchführt, Konvertieren, durch das Schlüsselkonvertierungsmodul der RNC, des CK und IK in einen Chiffreschlüssel, Kc, und Senden des Kc an die BSC;
das Schlüsselkonvertierungsmodul der BSC konfiguriert ist, um eine Schlüsselkonvertierung des von dem Multisystem-Kernnetz gesendeten Schlüssels auf die folgende Weise durchzuführen, um den Zielsystemschlüssel zu erhalten: falls der von dem Multisystem-Kernnetz gesendete Schlüssel der anfängliche Wert ist und der Schlüssel der Kc ist, wenn die Benutzerausrüstung eine Übergabe von dem GSM zu dem UMTS oder TD-SCDMA-System durchführt, Konvertieren, durch das Schlüsselkonvertierungsmodul der BSC, des Kc in den CK und IK und Senden des CK und IK an die RNC.

9. Vorrichtung gemäß Anspruch 6, wobei das Multisystem-Funkzugangsnetz in einer Einzelmodusform oder einer Multimodusform vorliegt.

## Revendications

1. Un procédé pour l'acquisition d'une clé par un système d'accès radio multisystème, comprenant :
lorsqu'un équipement utilisateur effectue un accès initial, le fait, pour un module d'analyse et de jugement de message d'authentification d'un réseau d'accès radio initial dans le réseau d'accès radio multisystème, de recevoir et d'analyser un message d'authentification envoyé par un coeur de réseau multisystème, et le fait, pour un module de jugement de clé du réseau d'accès radio initial, de juger si une clé de chiffrement utilisée par le réseau d'accès radio initial et envoyée par le coeur de réseau multisystème subséquemment est une valeur initiale de la clé de chiffrement générée par un HLR/AuC (Home Location Register/Authentication Center, enregistreur de localisation nominal/centre d'authentification) selon un résultat d'analyse ; et
s'il est jugé que la clé envoyée par le coeur de réseau multisystème est la valeur initiale, lorsque l'équipement utilisateur effectue un transfert multisystème du réseau d'accès radio initial à un réseau d'accès radio cible dans le réseau d'accès radio multisystème, le fait, pour un module de conversion de clé du réseau d'accès radio initial, d'effectuer une conversion de clé sur la clé de chiffrement afin d'obtenir une clé de système cible, qui est transmise au réseau d'accès radio cible ;
dans lequel,
le réseau d'accès radio multisystème comprend un RNC (Radio Network Controller, contrôleur de réseau radio) et un BSC (Base Station Controller, contrôleur de station de base), et le RNC et le BSC comprennent tous les deux le module d'analyse et de jugement de message d'authentification, le module de jugement de clé et le module de conversion de clé, dans lequel :
l'étape consistant à juger si la clé envoyée par le coeur de réseau multisystème subséquemment est la valeur initiale selon un résultat d'analyse comprend : lorsque l'équipement utilisateur effectue l'accès initial par l'intermédiaire du RNC, et que le message d'authentification est un message d'authentification quintuplet, ou, lorsque l'équipement utilisateur effectue l'accès initial par l'intermédiaire du BSC, et que le message d'authentification n'est pas le message d'authentification quintuplet, le fait de juger que la clé envoyée par le coeur de réseau multisystème subséquemment est la valeur initiale.

2. Le procédé selon la revendication 1, dans lequel le message d'authentification comprend une demande d'authentification et une réponse d'authentification ;
l'étape consistant à recevoir et à analyser le message d'authentification comprend : si la demande d'authentification inclut un jeton d'authentification ou la réponse d'authentification inclut une extension de paramètre de réponse d'authentification, le fait de juger que le message d'authentification est le message d'authentification quintuplet.

3. Le procédé selon la revendication 1, dans lequel l'étape consistant pour le réseau d'accès radio initial à effectuer une conversion de clé sur la clé afin d'obtenir une clé de système cible comprend :
si la clé envoyée par le coeur de réseau multisystème est une clé de chiffrement, CK, et une clé d'intégrité, IK, et la CK et l'IK sont la valeur initiale, lorsque l'équipement utilisateur effectue un transfert d'un UMTS (Universal Mobile Telecommunications System, système universel de télécommunications mobiles) ou d'un système TD-SCDMA (Time Division-Synchronous Code Division Multiple Access, accès multiple par répartition en code synchrone-répartition temporelle) à un GSM (Global System for Mobile communications, système mondial de communications mobiles), le fait pour le réseau d'accès radio initial de convertir la CK et l'IK en une clé de chiffrement, Kc ; ou, si la clé envoyée par le coeur de réseau multisystème est la Kc, et la Kc est la valeur initiale, lorsque l'équipement utilisateur effectue un transfert du GSM à l'UMTS ou au système TD-SCDMA, le fait pour le réseau d'accès radio initial de convertir la Kc en la CK et l'IK.

4. Le procédé selon la revendication 3, dans lequel :
l'étape consistant à convertir la CK et l'IK en la Kc comprend : lorsque l'équipement utilisateur effectue un transfert vers le GSM, le fait pour le RNC d'accomplir la conversion de la CK et de l'IK en la Kc et d'envoyer la Kc au BSC ;
l'étape consistant à convertir la Kc en la CK et l'IK comprend : lorsque l'équipement utilisateur effectue un transfert vers l'UMTS ou le système TD-SCDMA, le fait pour le BSC d'accomplir la conversion de la Kc en la CK et l'IK et d'envoyer la CK et l'IK au RNC.

5. Le procédé selon la revendication 1, dans lequel le réseau d'accès radio multisystème est dans une forme monomode ou une forme multimode.

6. Un appareil pour l'acquisition d'une clé par un réseau d'accès initial dans un système d'accès radio multisystème, comprenant :
un module d'analyse et de jugement de message d'authentification, configuré pour :
lorsqu'un équipement utilisateur effectue un accès initial, recevoir et analyser un message d'authentification envoyé par un coeur de réseau multisystème ;
un module de jugement de clé, configuré pour : juger si une clé de chiffrement utilisée par le réseau d'accès radio initial et envoyée par le coeur de réseau multisystème subséquemment est une valeur initiale de la clé de chiffrement générée par un HLR/AuC selon un résultat d'analyse ; et
un module de conversion de clé, configuré pour : si le module de jugement de clé juge que la clé envoyée par le coeur de réseau multisystème est la valeur initiale, lorsque l'équipement utilisateur effectue un transfert multisystème du réseau d'accès radio initial à un réseau d'accès radio cible dans le réseau d'accès radio multisystème, effectuer une conversion de clé sur la clé de chiffrement envoyée par le coeur de réseau multisystème afin d'obtenir une clé de système cible, qui est transmise au réseau d'accès radio cible ;
dans lequel le réseau d'accès radio multisystème comprend deux unités logiques : un RNC et un BSC, et le RNC et le BSC comprennent tous les deux le module d'analyse et de jugement de message d'authentification, le module de jugement de clé et le module de conversion de clé, dans lequel :
le module de jugement de clé du RNC est configuré pour juger si la clé envoyée par le coeur de réseau multisystème est la valeur initiale de la manière suivante : lorsque l'équipement utilisateur effectue l'accès initial par l'intermédiaire du RNC, et que le module d'analyse et de jugement de message d'authentification du RNC juge que le message d'authentification reçu est un message d'authentification quintuplet, juger que la clé envoyée par le coeur de réseau multisystème est la valeur initiale ;
le module de jugement de clé du BSC est configuré pour juger si la clé envoyée par le coeur de réseau multisystème est la valeur initiale de la manière suivante : lorsque l'équipement utilisateur effectue l'accès initial par l'intermédiaire du BSC, et que le module d'analyse et de jugement de message d'authentification du BSC juge que le message d'authentification reçu n'est pas le message d'authentification quintuplet, juger que la clé envoyée par le coeur de réseau multisystème est la valeur initiale.

7. L'appareil selon la revendication 6, dans lequel le message d'authentification comprend une demande d'authentification et une réponse d'authentification ;
le module d'analyse et de jugement de message d'authentification est configuré pour analyser le message d'authentification envoyé par le coeur de réseau multisystème de la manière suivante : si la demande d'authentification inclut un jeton d'authentification ou la réponse d'authentification transporte une extension de paramètre de réponse d'authentification, juger que le message d'authentification est le message d'authentification quintuplet.

8. L'appareil selon la revendication 6, dans lequel,
le module de conversion de clé du RNC est configuré pour effectuer une conversion de clé sur la clé envoyée par le coeur de réseau multisystème afin d'obtenir la clé de système cible de la manière suivante : si la clé envoyée par le coeur de réseau multisystème est la valeur initiale, et la clé comprend une clé de chiffrement, CK, et une clé d'intégrité, IK, lorsque l'équipement utilisateur effectue un transfert d'un UMTS ou d'un système TD-SCDMA à un GSM, le module de conversion de clé du RNC convertit la CK et l'IK en une clé de chiffrement, Kc, et envoie la Kc au BSC ;
le module de conversion de clé du BSC est configuré pour effectuer une conversion de clé sur la clé envoyée par le coeur de réseau multisystème afin d'obtenir la clé de système cible de la manière suivante : si la clé envoyée par le coeur de réseau multisystème est la valeur initiale, et la clé est la Kc, lorsque l'équipement utilisateur effectue un transfert du GSM à l'UMTS ou au système TD-SCDMA, le module de conversion de clé du BSC convertit la Kc en la CK et l'IK et envoie la CK et l'IK au RNC.

9. L'appareil selon la revendication 6, dans lequel le réseau d'accès radio multisystème est dans une forme monomode ou une forme multimode.
